# FASCICULE DE BREVET EUROPEEN

(11) **EP 1 965 056 B1**
(45) Date de publication et mention de la délivrance du brevet: **07.04.2010**
(21) Numéro de dépôt: 08102136.2
(22) Date de dépôt: 28.02.2008
(51) Int. Cl.: F02C 7/264, F01D 19/00

(54) **Procédé pour le démarrage d'un moteur d'hélicoptère à turbine à gaz, circuit d'alimentation en carburant d'un tel moteur, et moteur ayant un tel circuit**
Verfahren zum Anlassen eines Hubschrauber-Gasturbinenmotors, Kraftstoffzuführkreiskauf eines solchen Motors und mit einem solchen Kreislauf ausgestatteter Motor
Method of starting a gas turbine helicopter engine, fuel supply circuit for such an engine, and engine having such a circuit

(30) Priorité: 02.03.2007 FR 0753613
(43) Date de publication de la demande: 03.09.2008
(73) Titulaire: Turbomeca, 64510 Bordes (FR)
(72) Inventeur: Verdier, Hubert, 64800 nay (FR)
(74) Mandataire: Joly, Jean-Jacques

(56) Documents cités:
- FR-A- 2 867 552
- GB-A- 842 354
- US-A- 2 970 440
- US-A- 5 809 771

## Description

### Arrière-plan de l'invention

L'invention concerne les moteurs d'hélicoptères à turbine à gaz, notamment l'alimentation en carburant de tels moteurs et un procédé pour leur démarrage.

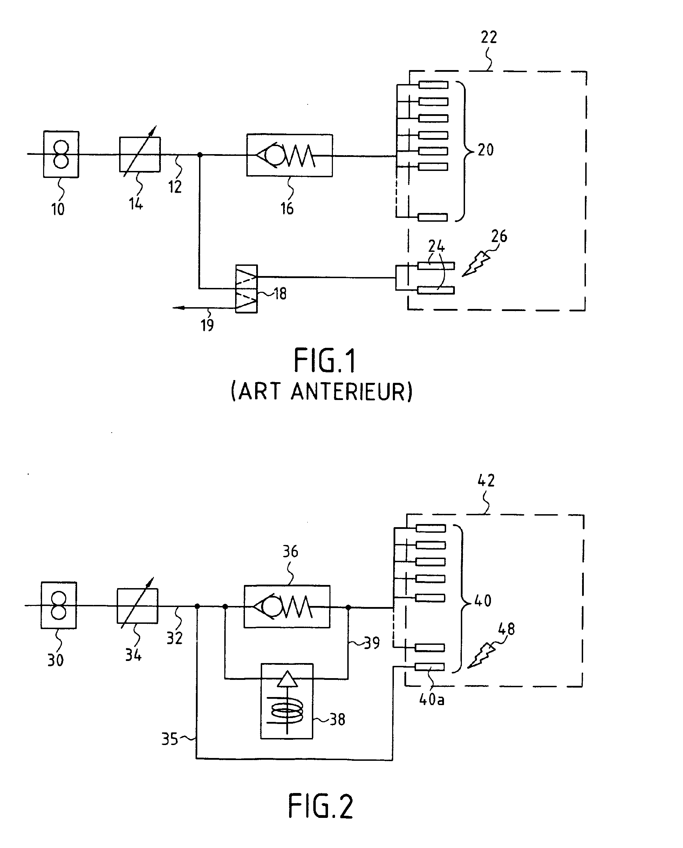

Un circuit connu utilisé de façon habituelle pour alimenter en carburant la chambre de combustion d'un moteur d'hélicoptère est montré schématiquement par la figure 1.

Le carburant est prélevé dans un réservoir (non représenté) au moyen d'une pompe 10 qui délivre le carburant sous pression dans une conduite d'alimentation 12 sur laquelle est monté un doseur 14 pour le réglage de débit. La conduite 12 est reliée par l'intermédiaire d'un clapet de retenue taré 16, ou clapet de niveau, à un ensemble d'injecteurs principaux 20 par lesquels un mélange air-carburant est injecté dans la chambre de combustion (schématisée par 22). Le clapet de niveau 16 impose une perte de charge, par exemple de 6 à 10 bars (0,6 à 1MPa), qui est réglée par exemple au moyen d'un ressort de tarage. En amont du clapet de niveau 16, la conduite 12 est en outre reliée à un ou plusieurs injecteurs de démarrage 24, généralement au nombre de deux, par l'intermédiaire d'un électro-clapet de démarrage 18. Une conduite de purge 19 est en outre reliée au clapet de démarrage 18, celui-ci étant commandé électriquement pour mettre les injecteurs de démarrage 24 en relation avec la conduite d'alimentation 12 ou la conduite de purge 19.

Pour le démarrage du moteur, le clapet 18 est commandé afin de mettre les injecteurs de démarrage 24 en relation avec la conduite d'alimentation 12. L'allumage est produit au moyen d'une bougie d'allumage 26 à proximité des injecteurs 24. Le clapet de niveau garantit l'existence au niveau des injecteurs 24 d'une pression de carburant suffisante au démarrage, y compris à haute altitude. Après démarrage, l'alimentation des injecteurs de démarrage 24 est interrompue par le clapet 18, celui-ci étant commandé pour mettre les injecteurs 24 en communication avec la conduite de purge, l'alimentation de la chambre étant assurée uniquement par les injecteurs principaux 20. La purge des injecteurs de démarrage est nécessaire pour éviter la cokéfaction du carburant s'il n'était pas purgé, laquelle cokéfaction pourrait nuire au bon fonctionnement ultérieur des injecteurs de démarrage en raison de dépôts solides formés.

Avec un tel circuit de carburant, la perte de charge provoquée par le clapet de niveau 16, qui est utile uniquement pour préserver une réserve de pression de carburant au démarrage, entraîne un surcroît permanent de pression dans la conduite d'alimentation en carburant pendant le fonctionnement du moteur. De plus, des injecteurs de démarrage sont prévus en supplément des injecteurs principaux et des moyens de purge des injecteurs de démarrage doivent être prévus.

Le document FR 2 867 552 décrit un injecteur de carburant pour une turbine à gaz avec au moins un premier et un deuxième circuits d'injection étagée de carburant.

### Objet et résumé de l'invention

L'invention vise à éviter les inconvénients précités et, selon un de ses aspects vise un procédé pour le démarrage d'un moteur d'hélicoptère à turbine à gaz alimenté par un circuit de carburant comprenant une conduite d'alimentation en carburant sous pression et une pluralité d'injecteurs principaux pour injecter du carburant dans une chambre de combustion du moteur, procédé selon lequel :
- on alimente au moins l'un des injecteurs principaux, formant injecteur principal de démarrage, directement par la conduite d'alimentation sous pression, tandis qu'une perte de charge est imposée entre la conduite d'alimentation sous pression et les autres injecteurs principaux,
- on provoque l'allumage au niveau de l'injecteur principal de démarrage, et
- après allumage, on supprime ladite perte de charge imposée entre la conduite d'alimentation et les autres injecteurs principaux de sorte que tous les injecteurs principaux sont alimentés sensiblement sous une même pression de carburant, sans perte de charge imposée.

L'un des injecteurs principaux étant utilisé comme injecteur de démarrage, il n'est pas nécessaire de prévoir des injecteurs de démarrage spécifiques, donc de moyens pour purger ceux-ci après démarrage. En outre, le clapet de niveau n'est actif qu'en phase de démarrage. En fonctionnement normal, un surcroît de pression dans la conduite d'alimentation n'est plus requis, puisqu'il n'y a pas de perte de charge imposée. En comparaison avec le circuit d'alimentation carburant de l'art antérieur, la pression en sortie de pompe peut donc être réduite et/ou une plus grande pression peut être disponible au niveau des injecteurs principaux pour améliorer la pulvérisation du carburant.

Selon un mode de réalisation du procédé, on impose la perte de charge par interposition d'un clapet de niveau entre la conduite d'alimentation sous pression et les autres injecteurs principaux et on supprime la perte de charge par fermeture d'une vanne tout ou rien dans une conduite de contournement du clapet de niveau.

L'invention vise aussi un circuit d'alimentation carburant pour un moteur d'hélicoptère à turbine à gaz permettant la mise en oeuvre du procédé de démarrage ci-dessus, un tel circuit comprenant une pluralité d'injecteurs principaux pour injecter du carburant dans une chambre de combustion du moteur et une conduite d'alimentation en carburant sous pression, circuit dans lequel :
- l'un au moins des injecteurs principaux formant injecteur principal d'allumage est relié directement à la conduite d'alimentation sous pression,
- les autres injecteurs principaux sont reliés à la conduite d'alimentation sous pression par l'intermédiaire d'un circuit comprenant, en parallèle, un clapet de niveau imposant une perte de charge et une vanne tout ou rien, et
- un circuit de commande de la vanne tout ou rien est prévu pour commander sélectivement l'application et la suppression de la perte de charge imposée par le clapet de niveau.

L'invention vise encore un moteur d'hélicoptère à turbine à gaz comprenant une chambre de combustion et un circuit d'alimentation en carburant de la chambre de combustion tel que défini ci-dessus, en particulier avec une chambre de combustion à écoulement d'air giratoire. En effet, l'écoulement giratoire de l'air dans la chambre de combustion favorise la propagation à l'ensemble des injecteurs principaux de la flamme engendrée au niveau de l'injecteur principal de démarrage.

### Brève description des dessins

L'invention sera mieux comprise à la lecture de la description faite ci-après, à titre indicatif mais non limitatif, en référence aux dessins annexés, sur lesquels :
- la figure 1, déjà décrite, est une vue schématique d'un circuit d'alimentation carburant de l'art antérieur pour un moteur d'hélicoptère à turbine à gaz ;
- la figure 2 est une vue schématique d'un mode de réalisation d'un circuit conforme à l'invention pour alimenter en carburant une chambre de combustion d'un moteur d'hélicoptère à turbine à gaz,
- la figure 3 est une vue très schématique partielle en demi-coupe axiale d'une chambre de combustion à écoulement d'air giratoire pouvant être alimentée en carburant par un circuit tel que celui de la figure 2 ; et
- la figure 4 est une partielle en coupe transversale et à échelle agrandie de la chambre de combustion de la figure 3.

### Description détaillée d'un mode de réalisation de l'invention

Dans le circuit d'alimentation en carburant de la figure 2, on retrouve, comme dans celui de la figure 1, une pompe 30 par laquelle du carburant est prélevé dans un réservoir (non représenté) pour être délivré sous pression dans une conduite d'alimentation 32 sur laquelle est monté un doseur 34 pour le réglage de débit du carburant.

Une pluralité d'injecteurs principaux 40 sont montés sur une paroi d'une chambre de combustion (schématisée par 42) pour injecter dans celle-ci un mélange air-carburant. L'un 40a des injecteurs principaux 40 est relié directement à la conduite d'alimentation 32 par une conduite 35. Les autres injecteurs principaux sont reliés à la conduite d'alimentation 32 par l'intermédiaire d'un circuit comprenant, en parallèle, un clapet de retenue taré, ou clapet de niveau 36 et une vanne tout ou rien 38 montée sur une conduite 39 de contournement du clapet de niveau 36, la conduite 35 étant reliée à la conduite d'alimentation 32 en amont du clapet de niveau 36. Le clapet de niveau 36 impose une perte de charge préréglée, par exemple de 6 à 10 bars (0,6 à 1MPa), au moyen par exemple d'un ressort de tarage. La vanne tout ou rien 38 est par exemple à commande électrique avec une position de fermeture dans laquelle la circulation dans la conduite de contournement 39 est bloquée, le clapet de niveau 36 étant alors actif, et une position d'ouverture dans laquelle la circulation dans la conduite 39 est autorisée, le clapet de niveau 36 étant alors inactif.

Le fonctionnement du circuit d'alimentation carburant est le suivant.

Au démarrage, l'électrovanne 38 est commandée pour fermer la conduite de contournement 39. Le clapet de niveau 36 est actif, grâce à quoi une pression élevée d'alimentation de l'injecteur principal de démarrage 40a est garantie. L'allumage est provoqué par une bougie d'allumage 48 à proximité de l'injecteur 40a, et la flamme se propage aux autres injecteurs principaux alimentés en carburant sous une pression plus faible du fait de la mise en circuit du clapet de retenue 36.

Après démarrage, l'électrovanne 38 est commandée pour ouvrir le passage par la conduite de contournement 39 et court-circuiter le clapet de niveau 36. Tous les injecteurs principaux 40, y compris l'injecteur principal de démarrage 40a, sont alimentés sous sensiblement la même pression de carburant.

Dans l'exemple illustré, un seul injecteur principal de démarrage est utilisé. On pourrait envisager d'utiliser plusieurs injecteurs principaux de démarrage reliés directement à la conduite d'alimentation 32 par la conduite 35, dans la mesure où, au démarrage, il subsiste une pression suffisante pour alimenter les autres injecteurs principaux à travers le clapet de retenue 36, y compris en cas de démarrage à altitude élevée.

On notera que l'injecteur principal de démarrage 40a est semblable aux autres injecteurs principaux, à la différence d'injecteurs connus ayant un circuit pilote utilisé au démarrage et un circuit principal.

La propagation aux autres injecteurs principaux de la flamme engendrée au niveau de l'injecteur principal de démarrage est facilitée dans le cas où la chambre de combustion 42 est à écoulement d'air giratoire.

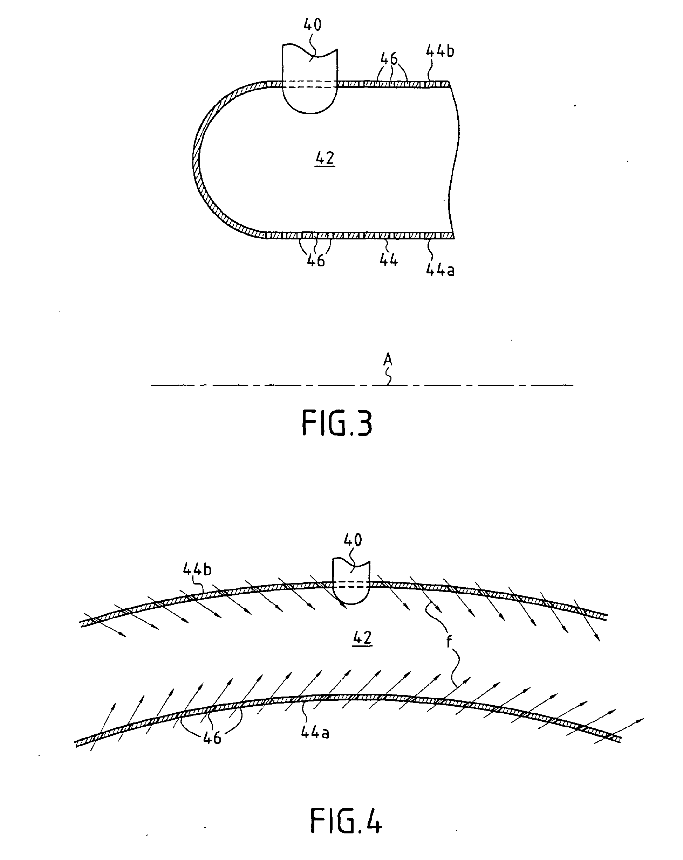

La figure 3 illustre très schématiquement une chambre de combustion annulaire à écoulement d'air giratoire avec des parois interne 44a et externe 44b multiperforées. Les injecteurs 40 sont portés par la paroi 44b.

Comme le montre la figure 4, les perforations 46 formées dans les parois 44a, 44b sont inclinées par rapport à la normale à ces parois. L'air introduit dans la chambre 42 à travers les perforations 46, comme illustré par les flèches f de la figure 4, engendre un écoulement giratoire autour de l'axe A de la chambre 42.

## Revendications

1. Procédé pour le démarrage d'un moteur d'hélicoptère à turbine à gaz alimenté par un circuit de carburant comprenant une conduite d'alimentation en carburant sous pression et une pluralité d'injecteurs principaux pour injecter du carburant dans une chambre de combustion du moteur, procédé **caractérisé en ce que:**
- on alimente au moins l'un (40a) des injecteurs principaux (40), formant injecteur principal de démarrage, directement par la conduite d'alimentation sous pression (32), tandis qu'une perte de charge est imposée entre la conduite d'alimentation sous pression et les autres injecteurs principaux,
- on provoque l'allumage au niveau de l'injecteur principal de démarrage, et
- après allumage, on supprime ladite perte de charge imposée entre la conduite d'alimentation et les autres injecteurs principaux de sorte que tous les injecteurs principaux sont alimentés sensiblement sous une même pression de carburant, sans perte de charge imposée.

2. Procédé selon la revendication 1 dans lequel on impose la perte de charge par interposition d'un clapet de niveau (36) entre la conduite d'alimentation sous pression (32) et les autres injecteurs principaux et on supprime la perte de charge par fermeture d'une vanne tout ou rien (38) dans une conduite (39) de contournement du clapet de niveau.

3. Circuit d'alimentation carburant pour une chambre de combustion d'un moteur d'hélicoptère à turbine à gaz, comprenant une pluralité d'injecteurs principaux (40) pour injecter du carburant dans une chambre de combustion du moteur et une conduite (32) d'alimentation en carburant sous pression, circuit **caractérisé en ce que:**
- l'un au moins (40a) des injecteurs principaux formant injecteur principal d'allumage est relié directement à la conduite d'alimentation sous pression,
- les autres injecteurs principaux sont reliés à la conduite d'alimentation sous pression par l'intermédiaire d'un circuit comprenant, en parallèle, un clapet de niveau (36) imposant une perte de charge et une vanne tout ou rien (38), et
- un circuit de commande de la vanne tout ou rien est prévu pour commander sélectivement l'application et la suppression de la perte de charge imposée par le clapet de niveau.

4. Moteur d'hélicoptère à turbine à gaz ayant une chambre de combustion et un circuit d'alimentation en carburant de la chambre de combustion selon la revendication 3.

5. Moteur selon la revendication 4, dans lequel la chambre de combustion est à écoulement d'air giratoire.

## Claims

1. A method of starting a gas turbine helicopter engine fed by a fuel circuit comprising a pipe for feeding fuel under pressure and a plurality of main injectors for injecting fuel into a combustion chamber of the engine, the method being **characterized in that :**
· at least one (40a) of the main injectors (40) that constitutes a starter main injector is fed directly from the pressurized feed pipe (32), while imposing a head loss between the pressurized feed pipe and the other main injectors;
· ignition is caused to take place at the starter main injector; and
· after ignition, said head loss imposed between the feed pipe and the other main injectors is eliminated so that all of the main injectors are fed with fuel at substantially the same pressure, without any imposed head loss.

2. A method according to claim 1, in which the head loss is imposed by interposing a level valve (36) between the pressurized feed pipe (32) and the other main injectors, and the head loss is eliminated by closing an on/off valve (38) in a pipe (39) bypassing the level valve.

3. A fuel feed circuit for a combustion chamber of a gas turbine helicopter engine, the circuit comprising a plurality of main injectors (40) for injecting fuel into a combustion chamber of the engine, and a pipe (32) for feeding fuel under pressure, the circuit being **characterized in that :**
· at least one (40a) of the main injectors forming a starter main injector is connected directly to the pressurized feed pipe;
· the other main injectors are connected to the pressurized feed pipe via a circuit comprising, in parallel, a level valve (36) imposing a head loss and an on/off valve (38); and
· a control circuit for the on/off valve is provided to select between the head loss that is imposed by the level valve being applied and being eliminated.

4. A gas turbine helicopter engine having a combustion chamber and a fuel feed circuit for the combustion chamber in accordance with claim 3.

5. An engine according to claim 4, in which the combustion chamber is a gyratory air flow combustion chamber.

## Patentansprüche

1. Verfahren zum Starten eines Helikopter-Gasturbinenmotors, der über einen Treibstoffkreis versorgt wird, welcher eine Leitung zum Zuführen von Treibstoff unter Druck sowie eine Vielzahl von Haupteinspritzdüsen zum Einspritzen von Treibstoff in eine Brennkammer des Motors umfaßt, wobei das Verfahren **dadurch gekennzeichnet ist, daß**:
- wenigstens eine (40a) der Haupteinspritzdüsen (40), die eine Starthaupteinspritzdüse bildet, direkt über die Druckzuführungsleitung (32) beaufschlagt wird, während zwischen der Druckzuführungsleitung und den anderen Haupteinspritzdüsen ein Druckabfall auferlegt wird,
- das Zünden im Bereich der Starthaupteinspritzdüse bewirkt wird, und
- nach dem Zünden der zwischen der Zuführungsleitung und den anderen Haupteinspritzdüsen auferlegte Druckabfall aufgehoben wird, so daß alle Haupteinspritzdüsen im wesentlichen unter einem gleichen Treibstoffdruck, ohne auferlegten Druckabfall beaufschlagt werden.

2. Verfahren nach Anspruch 1, wobei der Druckabfall durch Zwischenschalten eines Niveauventils (36) zwischen der Druckzuführungsleitung (32) und den anderen Haupteinspritzdüsen auferlegt wird und der Druckabfall durch Schließen eines Auf/Zu-Ventils (38) in einer Leitung (39) zur Umgehung des Niveauventils aufgehoben wird.

3. Treibstoffversorgungskreis für eine Brennkammer eines Helikopter-Gasturbinenmotors, umfassend eine Vielzahl von Haupteinspritzdüsen (40) zum Einspritzen von Treibstoff in eine Brennkammer des Motors sowie eine Leitung (32) zum Zuführen von Treibstoff unter Druck, wobei der Kreis **dadurch gekennzeichnet ist, daß**:
- wenigstens eine (40a) der Haupteinspritzdüsen, welche eine Zündungshaupteinspritzdüse bildet, direkt mit der Druckzuführungsleitung verbunden ist,
- die anderen Haupteinspritzdüsen über einen Kreis, der parallel geschaltet ein einen Druckabfall auferlegendes Niveauventil (36) und ein Auf/Zu-Ventil (38) umfaßt, mit der Druckzuführungsleitung verbunden sind, und
- ein Kreis zur Steuerung des Auf/Zu-Ventils vorgesehen ist, um das Anlegen und das Aufheben des durch das Niveauventil auferlegten Druckabfalls selektiv zu steuern.

4. Helikopter-Gasturbinenmotor, der eine Brennkammer und einen Kreis zum Beaufschlagen der Brennkammer mit Treibstoff nach Anspruch 3 aufweist.

5. Motor nach Anspruch 4, wobei die Brennkammer eine Brennkammer mit kreisender Luftströmung ist.
